# EUROPÄISCHE PATENTSCHRIFT

(11) **EP 0 530 532 B1**
(45) Veröffentlichungstag und Bekanntmachung des Hinweises auf die Patenterteilung: **30.11.1994**
(21) Anmeldenummer: 92113452.4
(22) Anmeldetag: 06.08.1992
(51) Int. Cl.: F02D 19/12, F02M 25/00

(54) **Vorrichtung und Verfahren zur direkten Feststoffadditivierung von Kraftstoffen mit Ferrocen**
Method and apparatus for direct solid material addition of fuels with ferrocen
Procédé et dispositif d'addition directe de matières solides de combustibles avec ferrocène

(30) Priorität: 04.09.1991 DE 4129408
(43) Veröffentlichungstag der Anmeldung: 10.03.1993
(73) Patentinhaber: Chemische Betriebe Pluto GmbH, 44649 Herne (DE)
(72) Erfinder: Thünker, Walther, Dr., W-4250 Bottrop 2 (DE); Lohmann, Gabriele, Dr., W-4670 Lünen (DE); Marschewski, Arnim, W-4650 Gelsenkirchen (DE)
(74) Vertreter: Lindner, Wolfgang

(56) Entgegenhaltungen:
- DE-A- 3 626 419
- DE-A- 3 801 947
- US-A- 4 362 534

## Beschreibung

Die Erfindung bezieht sich auf eine Vorrichtung und ein Verfahren zur direkten Feststoffadditivierung von Kraftstoffen mit Ferrocen.

Die Vorteile von Ferrocen enthaltenden Kraftstoffen, nämlich eine Reduzierung des Kraftstoffverbrauchs und der Abgasverschmutzung sowie Entfernung oder Herabsetzung von Kohlenstoffabscheidungen sind bereits in der DE-C2-3801947 in bezug auf Otto-Motoren mit speziell gehärteten Sitzen für die Auslaßventile und in der DE-C1-3715473 in bezug auf Otto-Motoren mit nicht speziell gehärteten Sitzen für die Auslaßventile beschrieben.

In den beiden vorerwähnten Druckschriften wird vorgeschlagen, das Ferrocen dem Kraftstoff in den entsprechend der dort empfohlenen Konzentration erforderlichen Mengen aufgrund seiner guten Löslichkeit unter Vermischen direkt zuzusetzen, oder ein Konzentrat von gelöstem Ferrocen herzustellen und von diesem dann die erforderliche Volumenmenge dem Kraftstoff zur Einstellung der gewünschten Ferrocen-Konzentrationen zuzusetzen. In der EP-A1-0334248 wird eine Additivierung des Motorschmieröls für Dieselmotoren mit Ferrocen vorgeschlagen. Gemäß der letztgenannten Druckschrift stellt die Additivierung des Motorschmieröls eine vorteilhafte Alternative zur Additivierung des Dieselkraftstoffes oder zu einer zusätzlichen Dosiereinrichtung dar.

Aus der US-A1-4 362 534 ist eine Vorrichtung zur direkten Feststoffadditivierung von Kraftstoffen bekannt, mit welcher geringe Mengen eines Polymers, wie z.B. Polystyrol, dem Kraftstoff zugesetzt werden. Die bekannte Vorrichtung weist ein mit einer Kraftstoffleitung verbundenes Mahlwerk auf, das mit einem Antrieb gekoppelt ist.

Der Erfindung liegt die Aufgabe zugrunde, eine Vorrichtung der eingangs erwähnten Art zu schaffen, mit deren Hilfe eine Feststoffadditivierung von Kraftstoffen mit Ferrocen exakt möglich ist. Außerdem soll ein Verfahren zur direkten Feststoffadditivierung von Kraftstoffen mit Ferrocen angegeben werden.

Diese Aufgabe wird erfindungsgemäß bei einer Vorrichtung und einem Verfahren der erwähnten Art durch die Merkmale des Patentanspruchs 1 bzw. die Merkmale des Patentanspruchs 10 gelöst.

Mit Hilfe des Mahlwerks, des damit gekoppelten und dieses treibenden Schrittmotors sowie mit der Steuerung für den Schrittmotor ist es bei nahezu allen Anwendungsfällen möglich, den Kraftstoff vor Ort mit Ferrocen in der exakt benötigten Menge zu additivieren und dadurch die eingangs erwähnten Vorteile in bezug auf eine Verbrauchsreduzierung und Schadstoffverminderung zu erzielen. Die erfindungsgemäße Vorrichtung ist einfach aufgebaut und ohne lange Einweisungszeiten einfach zu bedienen.

Vorteilhafterweise hat das Mahlwerk eine mit Ferrocen befüllte Mahlkammer, in der zur Vergleichmäßigung der Füllung der Mahlkammer ein Rührer angeordnet ist. Dadurch ist die Reproduzierbarkeit der pro Zeiteinheit von dem Mahlwerk bei konstanter Drehgeschwindigkeit zerkleinerten Ferrocenmenge verbessert. Es ist damit möglich, die pro Zeiteinheit bei konstanter Drehgeschwindigkeit von dem Mahlwerk zerkleinerte Ferrocenmenge weitgehend konstant zu halten.

Gemäß einer vorteilhaften Weiterbildung des Erfindungsgegenstandes weist das Mahlwerk eine Welle auf, wobei der Rührer an der Welle befestigt und mittels dieser drehbar ist. Dadurch ist ein unregelmäßiges Nachrutschen des feststofförmigen Ferrocens weitgehend verhindert und ein vereinheitlichtes Lückenvolumen der in der Mahlkammer vorhandenen Schüttung sichergestellt. Vorteilhafterweise ist das Ferrocen in Form von Stäbchen oder Pillen ausgebildet, wobei der Durchmesser der Ferrocen-Pillen vorzugsweise etwa 2,5 bis 5 mm beträgt. Dadurch kann es weniger leicht zu Fehlfüllungen der Mahlkammer kommen.

Gemäß einer vorteilhaften Weiterbildung beträgt die Drehgeschwindigkeit des Mahlwerks etwa 0,25 1/s. Bei einer solchen Drehgeschwindigkeit lassen sich die für eine genaue Dosierung erforderlichen Ferrocenmengen dem Kraftstoff exakt zugeben. Auch dieses Merkmal trägt zu einer deutlichen Steigerung der Reproduzierbarkeit der von dem Mahlwerk abgegebenen Ferrocenmenge bei.

Vorteilhafterweise sind Schrittmotor und Steuerung derart ausgebildet und aufeinander abgestimmt, daß das Mahlwerk in minimalen Schritten von etwa 1° drehbar ist. Damit ist die von dem Mahlwerk abgegebene Ferrocenmenge genau dosierbar. Auch kleinste Ferrocenmengen können dem Kraftstoff unproblematisch zugefügt werden.

Vorteilhaft ist ferner, daß die Steuerung eine Datenverarbeitungsanlage umfaßt, so daß die gesamte Vorrichtung mit hoher Genauigkeit automatisch oder halbautomatisch betrieben werden kann.

Besonders vorteilhaft läßt sich die erfindungsgemäße Vorrichtung in ein Kraftfahrzeug mit Otto-Motor oder mit Dieselmotor in Verbindung mit einem dem Dieselmotor nachgeschalteten Partikelfiltersystem oder in eine Feuerungsanlage für leichtes Heizöl einbauen. Damit läßt sich die erforderliche Ferrocenmenge auf einfache Weise in Abhängigkeit mit der jeweiligen Betankungsmenge zugeben. Es ist aber auch möglich, die Vorrichtung nicht dem jeweiligen Kraftfahrzeug oder der jeweiligen Feuerungsanlage, sondern der Betankungsanlage bzw. dem Betankungsfahrzeug zuzuordnen.

Die im kennzeichnenden Teil des Patentanspruchs 10 angegebenen Verfahrensschritte ermöglichen eine direkte Feststoffadditivierung von Kraftstoffen mit Ferrocen, wobei das Ferrocen exakt in der geforderten Menge zugegeben wird. Dadurch ist ein erhöhter Anteil an Ferrocen in dem Kraftstoff verhindert und eine Zugabe von Ferrocen lediglich in der Konzentration gewährleistet, die zur Erzielung der eingangs erwähnten Vorteile benötigt wird.

Verfahrensseitig ist ferner vorteilhaft, das Ferrocen der Kraftstoffmenge kontinuierlich oder diskontinuierlich in einem Kraftstofftank oder in der Kraftstoffleitung zugeben zu können. Somit kann das Ferrocen nach jedem Betankungsvorgang, also diskontinuierlich, beispielsweise dem Kraftfahrzeugtank oder auch kontinuierlich, beispielsweise in die den Kraftfahrzeugtank mit dem Motor verbindende Kraftstoffleitung entsprechend der durch die Kraftstoffleitung strömenden Kraftstoffmenge zugegeben werden.

Vorteilhaft ist ferner, den Betrag der durch die Kraftstoffleitung strömenden Kraftstoffmenge in die Steuerung einzugeben und die entsprechend benötigte Ferrocenmenge automatisch zu bestimmen und der Kraftstoffmenge mittels des Mahlwerks zuzugeben. Damit ist es möglich, den Betrag der in den Tank eingefüllten Kraftstoffmenge nach jedem Betankungsvorgang in die Steuerung einzugeben und eine diskontinuierliche Zugabe von Ferrocen zu dem Kraftstoff herbeizuführen. Andererseits kann die momentane Durchflußmenge des Kraftstoffes durch die Kraftstoffleitung zur kontinuierlichen Steuerung und damit zur kontinuierlichen Zugabe von Ferrocen an den Kraftstoff verwendet werden. Insbesondere das letztgenannte kontinuierliche Verfahren kann besonders vorteilhaft automatisch erfolgen.

Ausführungsbeispiele des Erfindungsgegenstandes werden nachfolgend anhand der Zeichnung näher erläutert. Es zeigen:
- Fig. 1: eine schematische, teilweise geschnittene Darstellung einer Vorrichtung zur direkten Feststoffadditivierung von Kraftstoffen mit Ferrocen;
- Fig. 2 bis Fig. 5: eine Darstellung der mit der Vorrichtung gemäß Fig. 1 erzielten Meßergebnisse für eine jeweils unterschiedliche Anzahl der Umdrehungen eines Mahlwerks der Vorrichtung.

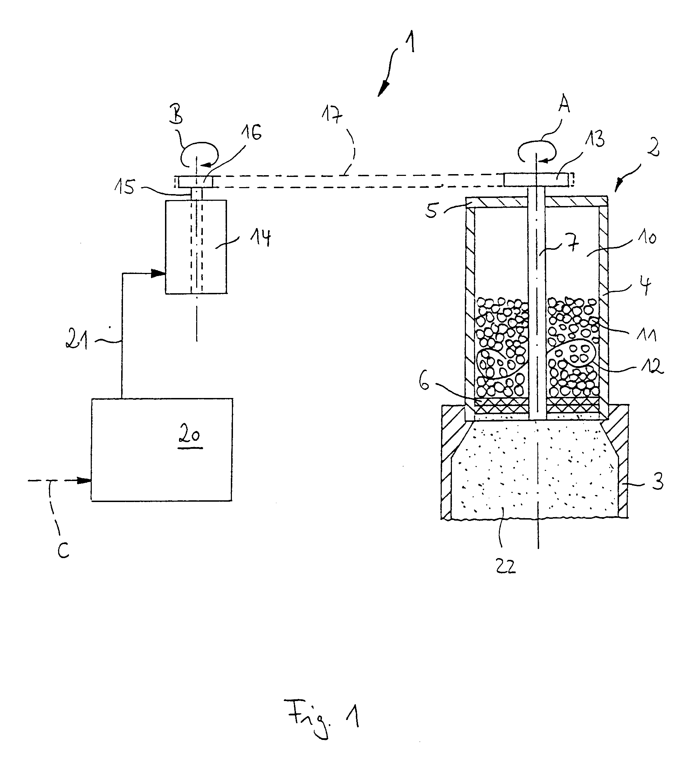

Eine erfindungsgemäße Vorrichtung 1 zur direkten Feststoffadditivierung von Kraftstoffen mit Ferrocen (Bis (π-cyclopentadienyl)eisen, C₁₀H₁₀Fe) ist schematisch in Fig. 1 dargestellt.

In der rechten Hälfte der Fig. 1 ist ein Mahlwerk 2 dargestellt, das auf nicht gezeigte Weise mit einer Leitung 3 verbunden ist. Die Leitung 3 ist Teil eines nicht näher dargestellten Kraftstofftanks oder einer nicht gezeigten Kraftstoffleitung.

Das Mahlwerk umfaßt ein zylindrisches Gehäuse 4 und einen die Oberseite des Gehäuses 4 verschließenden Deckel 5. Das dem Deckel 5 gegenüberliegende Ende des Mahlwerks 2 ist mittels Mahlelementen 6 verschlossen, von denen ein Teil fest mit dem Gehäuse 4 verbunden und von denen ein anderer Teil relativ zum Gehäuse 4 bewegbar auf einer den Deckel 5 und die feststehenden Mahlelemente durchsetzenden Welle 7 angeordnet ist. Somit ist ein Teil der Mahlelemente mittels der drehbaren Welle 7 (siehe Pfeil A) relativ zum Gehäuse 4 bewegbar.

Damit begrenzen das Gehäuse 4, der Deckel 5 und ein Teil der Mahlelemente 6 eine Mahlkammer 10, die teilweise mit feststofförmigem Ferrocen in Form von Kugeln oder Pillen 11 befüllt ist.

Auf der Welle 7 und mit dieser drehbar ist ein Rührer 12 angeordnet, der in Fig. 1 lediglich schematisch angedeutet ist. Der Rührer 12 ist von den Mahlelementen 6 beabstandet, wobei der Abstand zwischen der zu den Mahlelementen weisenden Unterkante des Rührers 12 und der zum Deckel 5 weisenden Oberseite der Mahlelemente 6 etwa 10 bis 15 mm beträgt.

Die Welle 7 steht, wie bereits erwähnt, über den Deckel 5 vor und trägt an ihrem äußeren Ende ein Zahnrad 13. Die Welle 7 ist in dem Deckel 5 sowie in einem Teil der Mahlelemente 6 drehbar gelagert.

In der linken Hälfte der Fig. 1 ist schematisch ein Schrittmotor 14 mit einer sich durch diesen hindurch erstreckenden Antriebswelle 15 gezeigt, mit deren äußerem Ende ein Antriebsritzel 16 drehfest verbunden ist. Antriebsritzel 16 und Zahnrad 13 des Mahlwerks 2 sind mittels eines in Fig. 1 gestrichelt dargestellten Antriebsriemens 17 derart verbunden, daß sich das Zahnrad 13 und die Welle 7 des Mahlwerks 2 in Richtung des Pfeils A drehen, wenn der Schrittmotor 14 seine Antriebswelle 15 und sein Antriebsritzel 16 in Richtung des Pfeils B antreibt.

Ebenfalls in der linken Hälfte von Fig. 1 ist schematisch eine Steuerung 20 gezeigt, die eine programmierbare Datenverarbeitungsanlage umfassen kann. In die Steuerung 20 ist beispielsweise die während eines Tankvorgangs dem Tank zugeführte Kraftstoffmenge oder die momentan durch eine Kraftstoffleitung strömende Kraftstoffmenge, z.B. über eine nicht dargestellte Eingabetastatur (vgl. gestrichelter Pfeil C) eingebbar. Mit Hilfe eines von der Steuerung 20 ausgegebenen Steuersignals 21 ist der Schrittmotor 14 und damit das Mahlwerk 2 derart antreibbar, daß der Leitung 3 die der Betankungsmenge oder augenblicklichen Durchflußmenge entsprechende Ferrocenmenge in Form von fein verteilten Ferrocenteilchen 22 zugegeben wird.

In Abhängigkeit von der Größe des Mahlwerks ist das in der Mahlkammer 10 befindliche Ferrocen in Form von Stäbchen oder Pillen ausgebildet. Beispielhafte Abmessungen eines Ferrocen-Stabes betragen:

| | | |
|---|---|---|
| (1) | Durchmesser | 12 mm |
| | Länge | 90 mm |
| | Masse | 12,5 g |
| (2) | Durchmesser | 20 mm |
| | Länge | 65 mm |
| | Masse | 23 g |

Der Durchmesser der Ferrocen-Pillen beträgt beispielhaft
2,5 oder 5 mm,
wobei die Masse jeder erstgenannten Pille 0,1 und die Masse jeder letztgenannten Pille 0,2 g beträgt.

Mit Hilfe der Steuerung 20 ist auch die Drehgeschwindigkeit des Schrittmotors 14 und damit des Mahlwerks 2 einstellbar. Die Steuerungs-Software gestattet es, die Verzögerungstakte zwischen zwei Drehschritten zwischen 1 und 2000 ms zu variieren, um so die Geschwindigkeit einzustellen. Eine bevorzugte Drehgeschwindigkeit beträgt etwa 0,25 1/s. Um auch geringe Ferrocenmengen dem Kraftstoff reproduzierbar zugeben zu können, sind Schrittmotor 14 und Steuerung 20 derart ausgebildet und aufeinander abgestimmt, daß das Mahlwerk 2 in minimalen Schritten von etwa 1° drehbar ist.

Besonders vorteilhaft ist der Einbau der zuvor beschriebenen Vorrichtung in ein Kraftfahrzeug mit Otto-Motor oder mit Dieselmotor in Verbindung mit einem dem Dieselmotor nachgeschalteten Partikelfiltersystem oder in eine Feuerungsanlage für leichtes Heizöl.

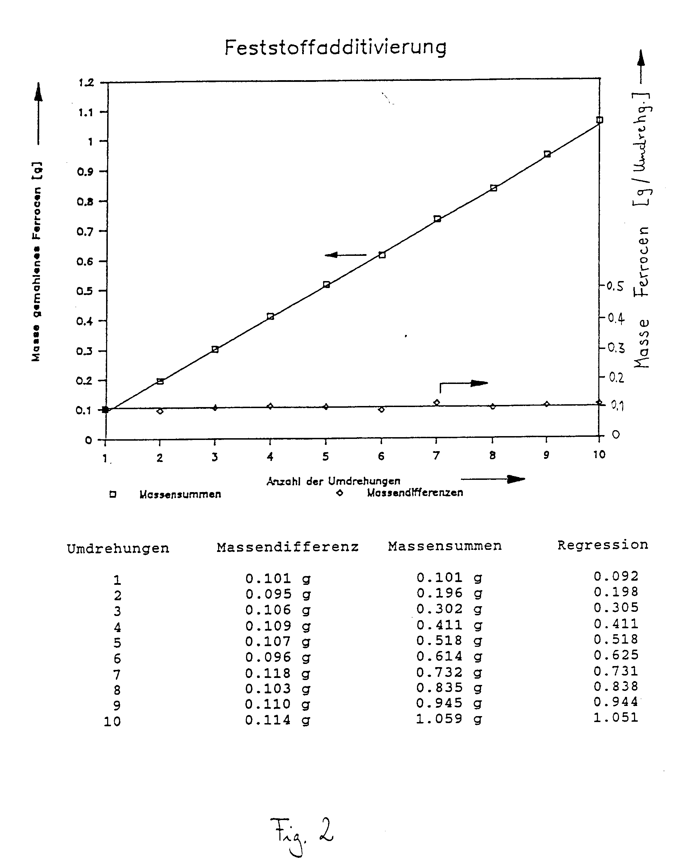

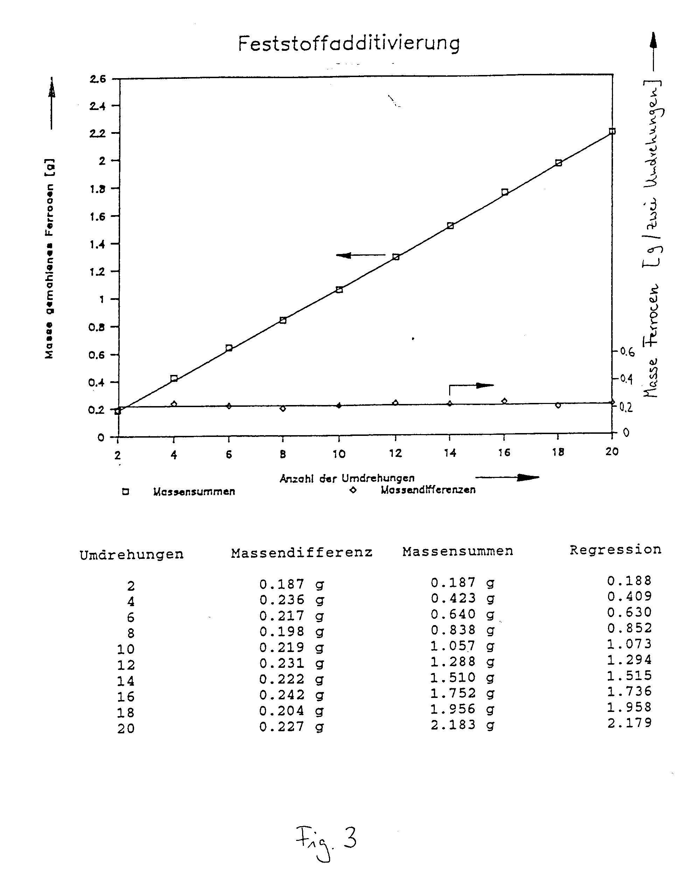

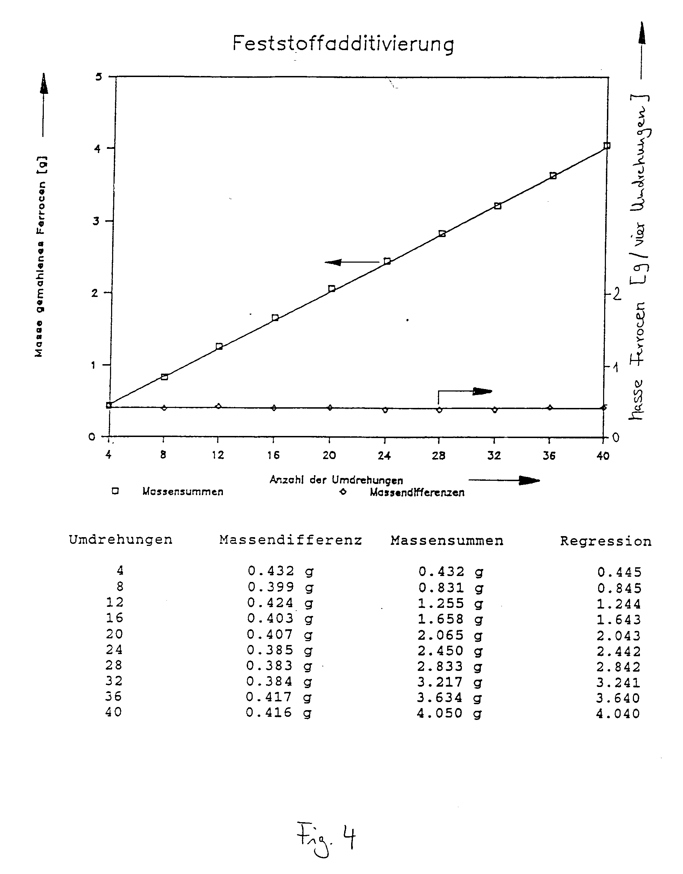

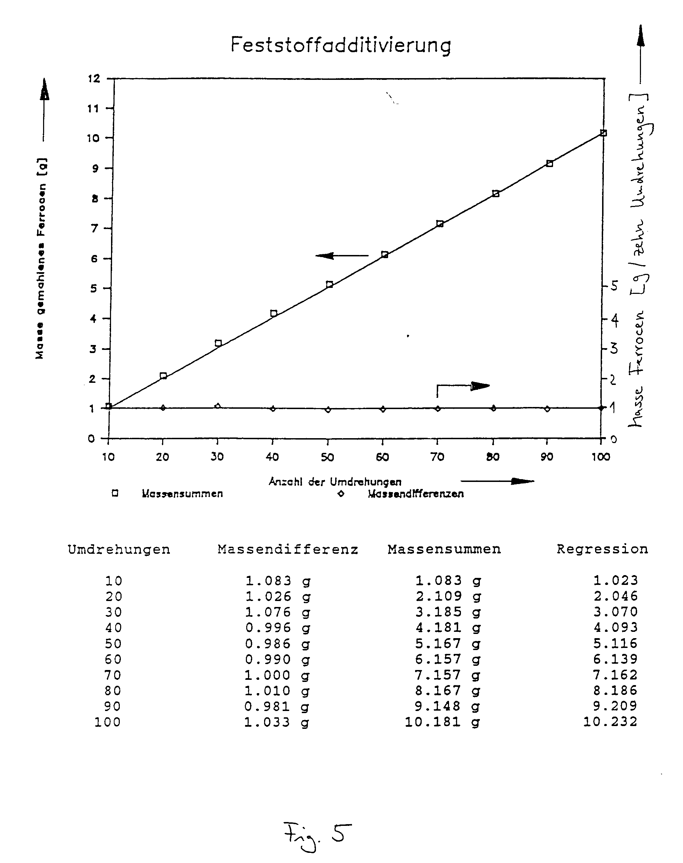

In den Fig. 2 bis 5 sind jeweils Meßergebnisse der zuvor beschriebenen Vorrichtung dargestellt. Dabei ist die Masse gemahlenen Ferrocens jeweils über der Anzahl der Umdrehungen des Mahlwerks aufgetragen. Die Anzahl der Umdrehungen des Mahlwerks liegt gemäß Fig. 2 zwischen 1 und 10, gemäß Fig. 3 zwischen 2 und 20, gemäß Fig. 4 zwischen 4 und 40, und gemäß Fig. 5 zwischen 10 und 100. Für jede der in den Diagrammen dargestellten Anzahl der Umdrehungen wird die dabei erhaltene gesamte Masse an Ferrocen ermittelt. Diese ist in den unter den Diagrammen angeordneten Tabellen unter dem Begriff "Massensummen" angegeben und in dem darüber befindlichen Diagramm auf der linken Ordinate abzulesen. Aus den in den Fig. 2 bis 5 dargestellten Diagrammen ist ersichtlich, daß die Massensummen mit der Anzahl der Umdrehungen des Mahlwerks linear zunehmen. Daraus folgt, daß die bei 10 Umdrehungen (siehe Fig. 2) gemahlene Masse an Ferrocen etwa zehnmal so groß ist wie die bei einer Umdrehung gemahlene Ferrocenmasse, oder daß die bei 100 Umdrehungen (siehe Fig. 5) gemahlene Ferrocenmasse etwa zehnmal so groß ist wie die bei 10 Umdrehungen gemahlene Ferrocenmasse.

Zusätzlich sind in den Fig. 2 bis 5 auch die sogenannten Massendifferenzen dargestellt, d.h. die Ferrocenmasse, die pro Umdrehung (Fig. 2), pro zwei Umdrehungen (Fig. 3), pro vier Umdrehungen (Fig. 4) und pro zehn Umdrehungen (Fig. 5) erhalten werden. Diese Werte sind auf der jeweils rechten Ordinate abzulesen. Aus den Fig. 2 bis 5 ist ersichtlich, daß die Massendifferenzen nahezu unabhängig sind von der Anzahl der Umdrehungen des Mahlwerks. Daraus folgt, daß pro Umdrehung des Mahlwerks jeweils etwa die gleiche Ferrocenmasse erzeugt wird (siehe Fig. 2), so daß die erhaltene Ferrocenmasse unabhängig davon ist, ob sie bei beispielsweise der vierten oder neunten Umdrehung erzeugt wird. Da also die gemahlene Ferrocenmasse pro Umdrehung des Mahlwerks in etwa konstant ist, ergeben sich bei zwei Umdrehungen (Fig. 3) etwa die doppelten Ferrocenmassen wie bei einer Umdrehung (Fig. 2), oder bei vier Umdrehungen (Fig. 4) etwa die doppelten Ferrocenmassen wie bei zwei Umdrehungen (Fig. 3), oder bei zehn Umdrehungen (Fig.5) etwa die zehnfachen Ferrocenmassen wie bei einer Umdrehung (Fig. 2).

Sämtliche der in den Fig. 2 bis 5 dargestellten Diagramme basieren auf der gleichen Drehgeschwindigkeit des Mahlwerks. Diese ist konstant und beträgt etwa 0,25 1/s.

Damit ist die in Fig. 1 dargestellte Vorrichtung in der Lage, Ergebnisse hoher Reproduzierbarkeit zu liefern und damit die eingangs erwähnten Vorteile der Feststoffadditivierung von Kraftstoffen mit Ferrocen sicherzustellen.

Das erfindungsgemäße Verfahren zur direkten Feststoffadditivierung von Kraftstoffen mit Ferrocen mittels der zuvor erläuterten Vorrichtung wird nachfolgend näher beschrieben.

Zunächst ist die durch eine Kraftstoffleitung strömende Kraftstoffmenge zu messen. Dies kann beispielsweise bei einem Betankungsvorgang die in den Tank eingefüllte Kraftstoffmenge sein. Anschließend wird in einem zweiten Schritt die benötigte Ferrocenmenge bestimmt und aus der so ermittelten Ferrocenmenge die entsprechende Anzahl der Umdrehungen des Mahlwerks ermittelt. Schließlich wird die zuvor bestimmte Ferrocenmenge der Kraftstoffmenge durch ein Betätigen des Schrittmotors und damit des Mahlwerks zugegeben.

Bei dem vorerwähnten Betankungsvorgang erfolgt die Ferrocenzugabe normalerweise diskontinuierlich, d.h. nach jedem Betankungsvorgang. Es ist aber auch eine kontinuierliche Ferrocenzugabe möglich, wenn der Durchsatz an Kraftstoff durch eine Kraftstoffleitung, beispielsweise die zwischen dem Tank und dem Motor angeordnete Kraftstoffleitung, ermittelt und die daraus resultierende Ferrocenmenge direkt in diese Kraftstoffleitung eingegeben wird.

Im zuvor beschriebenen ersten Fall (diskontinuierliche Zugabe von Ferrocen) wird deshalb der Betrag der benötigten Ferrocenmenge oder die der Ferrocenmenge entsprechende Anzahl der Umdrehungen des Mahlwerks vorzugsweise manuell in die Steuerung 20 eingeben (siehe gestrichelter Pfeil C in Fig. 1).

Im Fall der kontinuierlichen Zugabe erfolgt diese Eingabe vorzugsweise automatisch.

Es ist ferner möglich, die Antriebswelle 15 des Schrittmotors 14 direkt mit der Welle 7 des Mahlwerks 2 zu verbinden, so daß Zahnrad 13, Antriebsritzel 16 und Antriebsriemen 17 entfallen können. Die Antriebswelle 15 kann in diesem Fall an die Welle 7 angekuppelt sein. Es ist ferner ner möglich, das Mahlwerk 2 direkt über die in einem Kraftfahrzeug ohnehin vorhandene Benzinpumpe zu steuern, so daß ein zusätzlicher Schrittmotor entfallen kann. Bei dem letztgenannten Ausführungsbeispiel erfolgt die Zugabe von Ferrocen zu dem Kraftstoff vorzugsweise kontinuierlich.

## Patentansprüche

1. Vorrichtung zur direkten Feststoffadditivierung von Kraftstoffen mit Ferrocen, mit einem mit einer Kraftstoffleitung oder einem Kraftstofftank verbundenen Mahlwerk (2), das zumindest teilweise mit feststofförmigem Ferrocen (11) befüllt ist, einem mit dem Mahlwerk (2) gekoppelten und dieses antreibenden Schrittmotor (14), und mit einer Steuerung (20) für den Schrittmotor (14).

2. Vorrichtung nach Anspruch 1, dadurch **gekennzeichnet,** daß das Mahlwerk (2) eine mit Ferrocen befüllte Mahlkammer (10), in der zur Vergleichmäßigung der Füllung der Mahlkammer ein Rührer (12) angeordnet ist.

3. Vorrichtung nach Anspruch 2, dadurch **gekennzeichnet,** daß das Mahlwerk (2) eine Welle (7) aufweist und der Rührer (12) an der Welle (7) drehfest gehalten und mittels dieser drehbar ist.

4. Vorrichtung nach einem der Ansprüche 1 bis 3, dadurch **gekennzeichnet,** daß das Ferrocen in Form von Stäbchen oder Pillen (11) ausgebildet ist.

5. Vorrichtung nach Anspruch 4, dadurch **gekennzeichnet,** daß der Durchmesser der Ferrocen-Pillen etwa 2,5 mm bis 5 mm beträgt.

6. Vorrichtung nach einem der vorhergehenden Ansprüche, dadurch **gekennzeichnet,** daß die Drehgeschwindigkeit des Mahlwerks (2) etwa 0,25 1/s beträgt.

7. Vorrichtung nach einem der vorhergehenden Ansprüche, dadurch **gekennzeichnet,** daß Schrittmotor (14) und Steuerung (20) derart ausgebildet und aufeinander abgestimmt sind, daß das Mahlwerk (2) in minimalen Schritten von etwa 1° drehbar ist.

8. Vorrichtung nach einem der vorhergehenden Ansprüche, dadurch **gekennzeichnet,** daß die Steuerung (20) eine Datenverarbeitungsanlage umfaßt.

9. Vorrichtung nach einem der vorhergehenden Ansprüche, dadurch **gekennzeichnet,** daß sie in ein Kraftfahrzeug mit Otto-Motor oder mit Dieselmotor in Verbindung mit einem dem Dieselmotor nachgeschalteten Partikelfiltersystem oder in eine Feuerungsanlage für leichtes Heizöl eingebaut ist.

10. Verfahren zur direkten Feststoffadditivierung von Kraftstoffen mit Ferrocen mittels einer Vorrichtung nach einem der vorhergehenden Ansprüche, **gekennzeichnet** durch die folgenden Schritte:
a) Messen der durch eine Kraftstoffleitung strömenden Kraftstoffmenge;
b) Bestimmen der benötigten Ferrocenmenge in Abhängigkeit der unter Punkt a) ermittelten Kraftstoffmenge;
c) Bestimmen der der unter Punkt b) ermittelten Ferrocenmenge entsprechenden Anzahl der Umdrehungen des Mahlwerks; und
d) Zugeben der unter Punkt b) ermittelten Ferrocenmenge zu der unter Punkt a) ermittelten Kraftstoffmenge durch Betätigen des Mahlwerks mit der unter Punkt c) ermittelten Anzahl der Umdrehungen.

11. Verfahren nach Anspruch 10, dadurch **gekennzeichnet,** daß das Ferrocen der Kraftstoffmenge kontinuierlich oder diskontinuierlich zugegeben wird.

12. Verfahren nach Anspruch 10 oder 11, dadurch **gekennzeichnet,** daß das Ferrocen der Kraftstoffmenge in einem Kraftstofftank oder in der Kraftstoffleitung zugegeben wird.

13. Verfahren nach einem der Ansprüche 10 bis 12, dadurch **gekennzeichnet,** daß der Betrag der durch die Kraftstoffleitung strömenden Kraftstoffmenge in die Steuerung eingegeben und die benötigte Ferrocenmenge automatisch bestimmt und der Kraftstoffmenge mittels des Mahlwerks zugegeben wird.

## Claims

1. Device for the direct solid fortification of fuels with ferrocene, with a grinder (2) which is connected to a fuel line or to a fuel tank and which is filled at least partially with ferrocene (11) in solid form, with a step motor (14) connected to and driving the grinder (2), and with a control system (20) for the step motor (14).

2. Device according to claim 1, characterized in that the grinder (2) has a grinding chamber (10) filled with ferrocene in which a stirrer (12) is arranged for the homogenization of the contents of the grinding chamber.

3. Device according to claim 2, characterized in that the grinder (2) has a shaft (7) and the stirrer (12) is held at the shaft (7) in rotation-resistant manner and is rotatable by means of this.

4. Device according to one of claims 1 to 3, characterized in that the ferrocene is shaped in the form of rods or pellets (11).

5. Device according to claim 4, characterized in that the diameter of the ferrocene pellets is approximately 2.5 mm to 5 mm.

6. Device according to one of the preceding claims, characterized in that the rotational speed of the grinder (2) is about 0.25 l/s.

7. Device according to one of the preceding claims, characterized in that the step motor (14) and the control system (20) are designed and matched to one another such that the grinder (2) is rotatable in minimum steps of about 1°.

8. Device according to one of the preceding claims, characterized in that the control system (20) includes a data processing system.

9. Device according to one of the preceding claims, characterized in that it is incorporated into a vehicle having an Otto engine or diesel engine in conjunction with a particle filter system connected downstream from the diesel engine or into a firing system for light heating oil.

10. Process for the direct solid fortification of fuels with ferrocene by means of a device according to one of the preceding claims, characterized by the following steps:
a) measuring the quantity of fuel flowing through a fuel line;
b) determining the required quantity of ferrocene in relation to the quantity of fuel ascertained under Point a);
c) determining the number of revolutions of the grinder corresponding to the ferrocene quantity ascertained under Point b);
d) adding the quantity of ferrocene ascertained under Point b) to the quantity of fuel ascertained under Point a) by operating the grinder with the number of revolutions ascertained under Point c).

11. Process according to claim 10, characterized in that the ferrocene is added to the quantity of fuel continuously or discontinuously.

12. Process according to claim 10 or 11, characterized in that the ferrocene is added to the quantity of fuel in a fuel tank or in the fuel line.

13. Process according to one of claims 10 to 12, characterized in that the amount of the fuel quantity flowing through the fuel line is input into the control system and the required quantity of ferrocene is determined automatically and the quantity of fuel is added by means of the grinder.

## Revendications

1. Dispositif pour l'addition directe de matières solides de combustible avec ferrocène, avec un dispositif de broyage (2) relié à une canalisation de combustible ou à un réservoir de combustible, qui est rempli au moins partiellement de ferrocène (11) sous forme solide, avec un moteur pas à pas (14) couplé au dispositif de broyage (2) et commandant celui-ci et avec une régulation (20) pour le moteur pas à pas (14).

2. Dispositif selon la revendication 1, caractérisé en ce que le dispositif de broyage (2) est une chambre de broyage remplie de ferrocène (10), dans lequel en vue de l'homogénéisation du rempiissage de la chambre de broyage, est disposé un agitateur (12).

3. Dispositif selon la revendication 2, caractérisé en ce que l'installation de broyage (2) possède un axe (7) et que l'agitateur (12) est maintenu solidairement en rotation sur l'axe (7) et à l'aide de celui-ci est rotatif.

4. Dispositif selon l'une des revendications 1 à 3, caractérisé en ce que le ferrocène est formé sous forme de bâtonnets ou de dragées (11).

5. Dispositif selon la revendication 4, caractérisé en ce que le diamètre des dragées de ferrocène s'élève à environ 2,5 mm jusqu'à 5 mm.

6. Dispositif selon l'une des revendications précédentes caractérisé en ce que la vitesse de rotation du dispositif de broyage s'élève à environ 0,25 l/s.

7. Dispositif selon l'une des revendications précédentes, caractérisé en ce que le moteur pas à pas (14) et la régulation (20) sont réalisés et sont mis en accord l'un avec l'autre, de telle sorte que le dispositif de broyage (2) peut tourner d'environ 1°, dans les étapes minimales

8. Dispositif selon l'une des revendications précédentes, caractérisé en ce que la régulation (20) comprend une installation de traitement de données.

9. Dispositif selon l'une des revendications précédentes, caractérisé en ce qu'il est installé dans un véhicule à moteur avec un moteur à allumage par étincelle ou avec un moteur diesel en liaison avec un système de filtre à particules post connecté au moteur diesel ou dans une installation de chauffage pour combustible léger.

10. Procédé d'addition directe de substances solides de combustibles avec du ferrocène à l'aide d'un dispositif selon l'une des revendications précédentes, caractérisé par les étapes suivantes :
a) mesure de la quantité de combustible qui s'écoule par une canalisation de combustible,
b) détermination de la quantité de ferrocène nécessaire en fonction de la quantité de combustible déterminée au point a).
c) détermination du nombre de rotations du dispositif de broyage correspondant à la quantité de ferrocène déterminé au point b) et,
d) ajout de la quantité de ferrocène déterminée au point b) à la quantité de combustible déterminée au point a) par actionnement du dispositif de broyage avec le nombre de rotations déterminé au point c)

11. Procédé selon la revendication 10, caractérisé en ce que le ferrocène est ajouté à la quantité de combustible d'une manière continue ou discontinue.

12. Procédé selon la revendication 10 ou 11, caractérisé en ce que le ferrocène est ajouté à la quantité de combustible dans un réservoir à combustible ou dans une canalisation de combustible.

13. Procédé selon l'une des revendications 10 à 12, caractérisé en ce que le montant de la quantité de combustible qui s'écoule par la canalisation de combustible est introduit dans la régulation et la quantité de ferrocène nécessaire est déterminée automatiquement et est versée dans la quantité de combustible à l'aide du dispositif de broyage.
